# EUROPEAN PATENT SPECIFICATION

(11) **EP 0 921 958 B1**
(45) Date of publication and mention of the grant of the patent: **17.07.2002**
(21) Application number: 97936913.9
(22) Date of filing: 28.08.1997
(51) Int. Cl.: B60K 5/04, B62D 47/02

(54) **BUS WITH TRANSVERSELY POSITIONED REAR DRIVE UNIT**
BUS MIT QUER EINGEBAUTER HECKANTRIEBSEINRICHTUNG
CAR AVEC ORGANE D'ENTRAINEMENT ARRIERE POSITIONNE TRANSVERSALEMENT

(30) Priority: 30.08.1996 SE 9603179
(43) Date of publication of application: 16.06.1999
(73) Proprietor: Scania CV Aktiebolag (publ), 151 87 Södertälje (SE)
(72) Inventor: BURMAN, Sam, S-141 72 Huddinge (SE)
(74) Representative: Waldebäck, Hans Olov
(86) International application number: SE9701426
(87) International publication number: WO9808700

(56) References cited:
- DE-A- 2 934 314
- GB-A- 818 850
- US-A- 2 093 859

## Description

The present invention relates to a bus of the kind indicated in the preamble to patent claim 1. Such a bus is known from document GB 818850 A.

### State of the art

Some previously known buses of the abovementioned kind have a transversely positioned rear drive unit with a supercharged in-line combustion engine, with the supercharging unit situated on the side of the engine which faces rearwards. This positioning is favourable with a view to the possibility of maximum utilisation, by the turbine of the supercharging unit, of the energy in the exhaust gases from the engine. If the engine is tilted at a large angle, of the order of 60°, so that the highest point of its cylinders will be relatively close to the rear wall of the bus, a supercharging unit thus positioned will protrude to a relatively large extent downwards and rearwards. This makes it necessary for the rear cross-member and the rear wall of the bus to be situated further rearwards, with consequent lengthening of the bus, which reduces the possibility of increasing, within the scope of the statutory rear axle pressure, the number of passengers (i.e. of increasing the net load) in the section of the bus rearward of the rear axle, since it makes it more difficult to accommodate space for a low-floor standing area within a limited overhang (i.e. within the space between the rear axle and the rear end of the bus). Such a standing area is of great significance in increasing the passenger capacity of the bus and in making it easy for passengers to board and alight without being hindered by steps in the rear part of the bus. A larger overhang also reduces the possibility of coping with large carriageway angles (as on ferry ramps and the like) and creates a general need for more space when manoeuvring the bus.

### Brief description of the invention

The object of the invention is to arrange a supercharged combustion engine, and components which cooperate with it, in a bus of the kind indicated in the preamble to the main claim in such a way as to utilise as effectively as possible from the net load point of view, and with regard to passenger convenience, a limited area intended for the drive unit of the bus to the rear of the rear axle. This also involves the aforesaid area being of relatively limited external dimensions but being so designed as to be nevertheless capable of containing an engine with sufficient power and efficiency to be able effectively to transport a relatively large number of passengers in a bus with limited external dimensions.

The way this is achieved in the present invention is indicated in the characterising part of patent claim 1. Arranging the supercharging unit of the engine in front of the engine block but above a flywheel cover connected to the engine makes it possible to reduce the external dimensions, particularly in the vertical direction, of the whole drive unit while maintaining joint operation of the supercharger unit and the engine in such a way as to achieve good engine performance.

In an advantageous embodiment of a bus according to the invention, the exhaust side of the engine faces rearwards, a turbo unit is arranged with its axis transverse to the longitudinal extent of the engine and the turbine is situated closest to the rear wall of the bus. This results in a short pipe run between the engine's exhaust outlet and the turbine inlet, thereby making effective use of the energy contained in the exhaust gases possible and hence contributing to good engine efficiency. A further result is a possible simplification of turbine shaft lubricant supply and draining without having to resort to the extra expense of special solutions for the turbo unit.

In another advantageous embodiment the engine is angled so that its valve cover/covers is/are the part/parts of the engine closest to the rear wall of the bus. This means the exhaust side of the engine being angled obliquely downwards towards the floor of the drive unit compartment. In that compartment this results in the exhaust side of the engine being separated from its inlet side, thereby facilitating controlled temperature maintenance in the drive unit compartment while at the same time being able to keep the total height of the engine low.

In a further advantageous embodiment a radiator device for the engine is situated along the rear sidewall of the bus above the end of the engine directed away from the flywheel cover. Such a radiator device incorporates a fan which when operating pushes air down across the inlet side of the engine and across other pans of the drive unit before said air leaves the drive unit compartment via outlets in the floor portion of the latter. The low engine height resulting from the combination of engine angling and supercharger unit positioning means that the cooling device can be positioned above and close to the engine without affecting the total height of the bus. This total height may instead be determined by passengers standing in the low-floor section of the bus, with the overall result of a relatively low bus. A further consequence is a compact drive unit module which simplifies bus manufacture while at the same time making it possible for the radiator fan to be used for ventilating the drive unit compartment.

Other features distinguishing the invention are indicated in the attached patent claims and in the description below of an advantageous embodiment of the invention.

### List of drawings

The description below of an embodiment of the invention is with reference to the attached drawings, which are as follows:
- Figure 1: depicts schematically a side view of a two-axled bus with a drive unit arrangement according to the invention,
- Figure 2: shows a view from above of the rear section of the bus depicted in Figure 1,
- Figure 3: depicts schematically a side view of a rear section of a bus with a drive unit arrangement according to the invention,
- Figure 4: shows a view from the rear of the bus depicted in Figure 3 and
- Figure 5: shows a view from above of the bus depicted in Figure 3.

### Description of an embodiment

Expressions used in this description such as in front of, forwards, front, behind, rearwards, rear, right and left are all with respect to the forward direction of the bus.

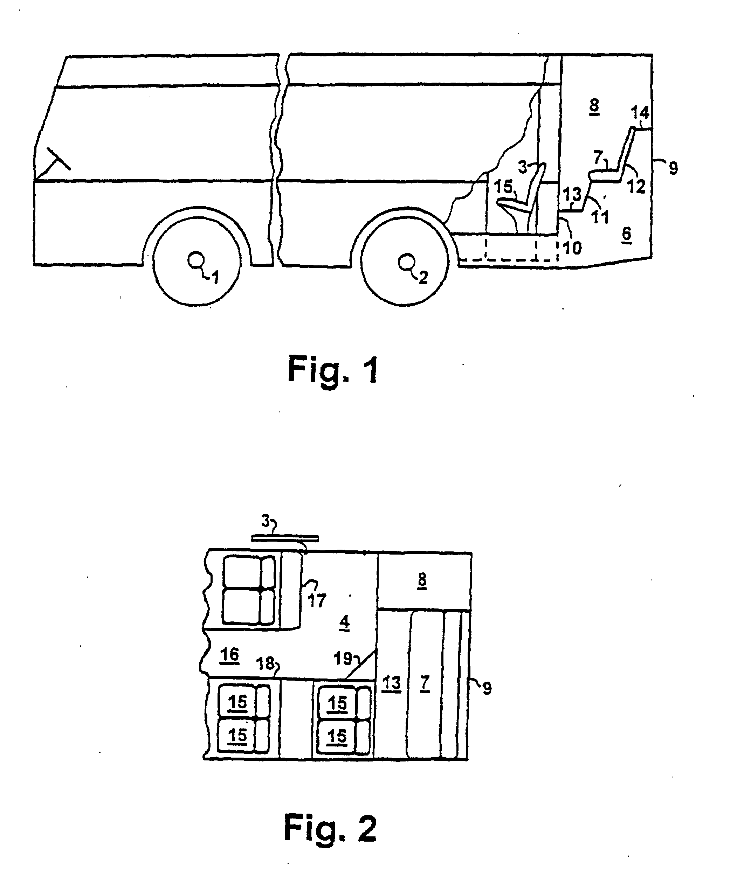

A two-axled bus depicted in Fig.1 is mainly intended for urban traffic and incorporates undepicted passenger doors both forward of the front axle 1 and between the front axle 1 and the rear axle 2. Rearward of the rear axle 2 the bus is also provided with a passenger door 3 leading to a standing area 4 which is depicted in the cut-away rear section of the bus in Figure 1 and may also be seen in Figure 2.

The bus's drive unit 5 is situated partly in a space 6 under a passenger bench seat 7 arranged in the extreme rear of the bus, and partly in a turret-like space 8 on the side of the bench seat 7 in the rear right corner of the bus. The space 6 extends across substantially the whole width of the bus and is limited rearwards by the rear wall 9 of the bus and forwards by substantially vertical walls 10, 11 and 12 which are connected not only to a floor plane 13 belonging to the bench seat 7 but also to an upper rear horizontal plane 14. The space 6 is also connected to the rear axle 2 by a space 28 situated along the left side of the bus.

The upward limiting plane of the space 28 supports passenger seats 15, and its right vertical wall plane 18 delineates the standing area 4 which adjoins a central aisle 16 situated at substantially the same height in the bus. The standing area 4 is limited rearwards by the vertical wall 10 and forwards by a wheel housing 17 of the rear axle. In the corner between the walls 10 and 18 a small step 19 is also arranged to facilitate access to the bench seat 7.

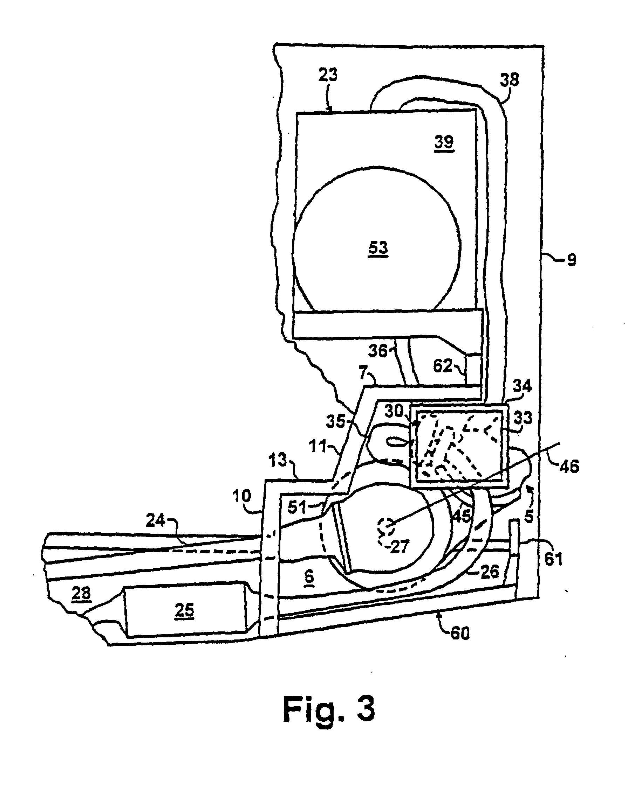

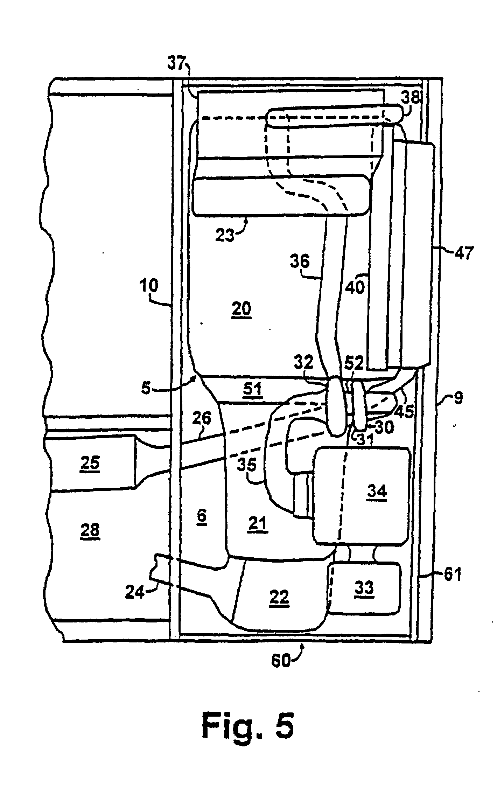

Essential parts of the bus's drive unit module may be seen in Figures 3, 4 and 5, in which certain body and chassis sections have been omitted to make it easier to understand the invention.

The drive unit's engine 20 and gearbox 21 with a bevel gear 22 are accommodated in the space 6, while the engine's radiator device 23 is arranged in the turret space 8 above the right end of the engine. From the bevel gear 22, the engine's drive power is transmitted to the rear axle via a propeller shaft 24 extending through the space 28, which also includes a silencer 25 which may incorporate exhaust gas cleaning equipment connected to the engine's exhaust line 26.

The engine 20 is advantageously a diesel engine which has sufficient power to provide a relatively heavy bus of large passenger capacity with good acceleration, thereby creating the possibility of relatively rapid transport in urban traffic. A supercharging unit 30 and a charge air cooler 37 are connected to the engine to improve its efficiency and increase the possible power available.

The supercharging unit 30 is advantageously a conventional turbo unit in which a turbine 31 utilises the engine's exhaust gas energy to drive a centrifugal compressor 32. The latter draws air in from an air inlet 33 situated in the space 6 on the left side of the bus via a substantially cylindrical air filter 34 and the air line 35. The air filter 34 is advantageously situated above the gearbox and with its cylinder axis in a plane perpendicular to the engine's crankshaft to make filter replacement easy during servicing. After being compressed, the air is forced by positive pressure from the compressor 32 to flow along a line 36 and then through the charge air cooler 37 (arranged in the turret space 8) in which the air is cooled before passing through a line 38 to the engine's undepicted inlet ducts via an inlet pipe 40.

The engine 20 has a number of cylinders placed in line. The front side of the engine incorporates parts belonging to the inlet system, while the rear side incorporates the engine's exhaust system parts, particularly its exhaust manifolds 45. The engine 20 is installed in the space 6 at a large angle, of the order of 60° to the vertical, so that its undepicted cylinders have their extent along a line 46. The upper parts of the cylinders are close to the rear wall of the bus. In a conventional but here undepicted manner the cylinders are covered by a cylinder head with inlet and outlet ports, valve mechanisms and injection parts. The outermost part of the cylinder head takes the form of one or more valve covers 47 which in this case is/are the engine component/components which extends/extend furthest rearwards.

The fact that the engine is angled with its exhaust side facing rearwards means that the effects of thermal radiation from it are limited to mainly affecting corresponding parts of the space 6. The turbo unit 30 is positioned radially outside a flywheel 51 fastened to the engine 20 and situated in front of the engine as seen in its longitudinal direction. The turbine 31 of the turbo unit 30 is directed rearwards, while the compressor 32 is directed forwards and is oriented so that the axis of rotation 52 of the turbo unit 30 is substantially perpendicular to the engine's crankshaft 27 and angled somewhat rearwards and downwards relative to the horizontal.

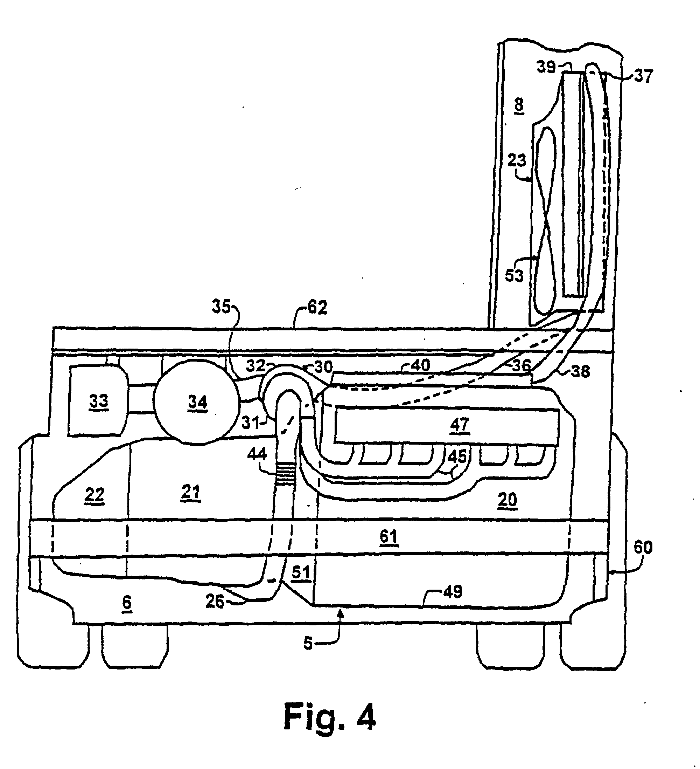

For better potential utilisation of the exhaust gas energy in the two separate exhaust manifolds 45 it is advantageous for the turbine 31 to have two separate inlets. The exhaust gases are led from the turbine via the line 26 incorporating a flexible pipe joint 44 (only depicted in Figure 4) to the exhaust gas treatment equipment in the space 28. The pipe joint 44 makes it possible to absorb relative movements between the exhaust parts belonging to the engine and the exhaust system parts fastened to the bus chassis.

The turbo unit is supplied conventionally with lubricating oil from the engine to lubricate and cool the turbine shaft. The lubricating oil from the turbine shaft drains directly to the engine's oil sump 49 via an undepicted outlet positioned low in the vertical direction.

The engine's cooling system incorporates conventionally not only the charge air cooler 37 but also a radiator 39 for the engine coolant and a fan 53 situated on the extreme left which draws outside air in through the cooler 37 and the radiator 39. The fan 53 pushes this air through the cooler and radiator down from the turret space 8 into and through the space 6 so that it is finally ejected via undepicted outlet apertures situated in the lower portion of the space 6. Apart from these apertures and an undepicted engine air inlet in its left sidewall, the space 6 is entirely enclosed with regard to noise.

The rear bus chassis module depicted in Figures 3, 4 and 5 is supported by a frame structure 60 to which panels belonging to the bus's fittings and body are intended to be fastened. This frame structure 60 incorporates a lower member 61 and an upper member 62 which both run across the whole bus. The lower member 61 supports not only undepicted rear suspension points for the drive unit but also a rear bumper of the bus. The bumper determines the bus's rear angle of interference, i.e. the angle of road ramps and the like with which the bus will cope without hitting them. The upper member 62 supports undepicted suspension points for the radiator arrangement and a large amount of equipment associated with the drive unit.
The highest points of the supercharging unit and the air filter are the main factors determining the position of the seat plane 7. The tilt of the engine is sufficient to enable the inherently bulky inlet air lines (and also fuel lines not here depicted which belong to the fuel system) to be accommodated on top of the inlet side of the engine without requiring heightening of the seat plane 7. The tilt of the engine is also so great that its flywheel cover 51 constitutes the limitation on how far rearwards the floor plane 13 belonging to the rear seat 7 can extend.

The arrangement according to the invention makes it possible to minimise the space for the type of drive unit indicated, both vertically and in the longitudinal direction of the bus. This is a prerequisite for effective utilisation, from the net load point of view, of a limited overhang rearward of the bus's rear axle while at the same time maintaining a low total bus height.

## Claims

1. Bus with a front axle (1) and at least one rear axle (2), a drive unit (5) situated in the rear end of the bus and incorporating a transversely positioned combustion engine (20) with cylinders placed in line and a transmission for driving the rear axle, where the engine (20) is substantially angled so that the highest point of its cylinders is relatively close to the rear wall (9) of the bus, **characterised in that** the engine is supercharged and a supercharging unit (30) belonging to the engine is situated radially outside a flywheel cover (31) connected to the engine.

2. Bus according to patent claim 1, ***characterised* in that** the engine has an exhaust side facing the rearward direction of the bus and an inlet side facing the forward direction of the bus, that the supercharging unit (30) is a turbo unit with a turbine (31) driven by exhaust gases and with a centrifugal compressor (32) mounted on the turbine shaft and driven by the turbine, and the turbine shaft (52) has an extent substantially transverse to the longitudinal extent of the engine, with the turbine directed towards the rear wall (9) of the bus.

3. Bus according to patent claim 2, ***characterised* in that** a substantially cylindrical filter (34) for cleaning the engine's inlet air is situated in the longitudinal direction of the engine after the supercharging unit (30) above a gearbox (21) connected to the engine and forming part of the bus's transmission.

4. Bus according to patent claim 3, ***characterised* in that** the supercharging unit (30) and/or the air filter (34) has/have upper limiting surfaces which essentially define an upper horizontal limiting plane which forms the base for a rear passenger bench seat (7).

5. Bus according to patent claim 4, ***characterised* in that** a horizontal floor portion (13) is adapted to passengers sitting on the rear passenger bench seat (7) and has a rear limiting line which runs across the bus and which is essentially defined by an outer limiting point of the engine's flywheel cover (51).

6. Bus according to any one of the foregoing patent claims, ***characterised* in that** the drive unit incorporates for the engine a radiator device (23) which is situated along the rear sidewall of the bus above the end of the engine directed away from the flywheel cover, which radiator device (23) incorporates a fan (53) which when operating pushes air down across the inlet side of the engine (20) and across other parts of the drive unit before said air leaves the drive unit space (6) via outlets in the floor portion of the latter.

7. Bus according to any one of the foregoing patent claims, ***characterised* in that** the engine's valve cover/covers (47) is/are the part/parts of its fixed components which limits/limit the engine's extent rearwards in the longitudinal direction of the bus.

## Patentansprüche

1. Omnibus mit einer Vorderachse (1) und mindestens einer Hinterachse (2), einer Antriebseinheit (5), die am Heck des Omnibusses angeordnet ist und einen querliegenden Verbrennungsmotor (20) mit Zylindern in Reihenanordnung aufweist, und einem Antriebsstrang zum Antreiben der Hinterachse, wobei der Motor (20) beträchtlich schräggestellt ist, so dass der höchste Punkt seiner Zylinder der Rückwand (9) des Omnibusses verhältnismäßig nahe ist, **dadurch gekennzeichnet, dass** der Motor aufgeladen ist und eine zum Motor gehörige Aufladeeinheit (30) radial außerhalb einer mit dem Motor verbundenen Schwungradabdeckung (51) angeordnet ist.

2. Omnibus nach Patentanspruch 1, **dadurch gekennzeichnet, dass** der Motor eine in bezug auf den Omnibus rückwärts gewandte Auspuffseite und eine in bezug auf den Bus vorwärts gewandte Einlassseite hat, dass die Aufladeeinheit (30) ein Turbolader mit einer von Abgasen getriebenen Turbine (31) und einem auf der Turbinenwelle angeordneten und von der Turbine angetriebenen Kreiselverdichter (32) ist, und die Turbinenwelle (52) sich im wesentlichen quer zur Längserstreckung des Motors erstreckt, wobei die Turbine der Rückwand (9) des Omnibusses zugewandt ist.

3. Omnibus nach Patentanspruch 2, **dadurch gekennzeichnet, dass** ein im wesentlichen zylindrischer Filter (34) zum Reinigen der Einlassluft für den Motor in der Längsrichtung des Motors nach der Aufladeeinheit (30) oberhalb eines Getriebes (21) angeordnet ist, welches mit dem Motor verbunden ist und ein Bestandteil des Antriebsstranges des Omnibusses bildet.

4. Omnibus nach Patentanspruch 3, **dadurch gekennzeichnet, dass** die Aufladeeinheit (30) und/oder der Luftfilter (34) eine obere Begrenzungsfläche aufweist,die im wesentlichen eine obere Begrenzungsebene darstellt, welche die Basis für eine rückwärtige Fahrgastsitzbank (7) bildet.

5. Omnibus nach Patentanspruch 4, **dadurch gekennzeichnet, dass** ein waagerechter Bodenabschnitt (13) an auf der rückwärtigen Fahrgastsitzbank (7) sitzende Fahrgäste angepasst ist und eine rückwärtige Begrenzungslinie hat, die sich quer durch den Omnibus erstreckt und im wesentlichen durch einen äußeren Begrenzungspunkt der Schwungradabdeckung (51) des Motors festgelegt ist.

6. Omnibus nach einem der vorangehenden Patentansprüche, **dadurch gekennzeichnet, dass** die Antriebseinheit einen Kühler (23) für den Motor aufweist, der entlang der hinteren Seitenwand des Omnibusses oberhalb des von der Schwungradabdeckung abgewandten Endes des Motors angeordnet ist, welcher Kühler (23) ein Gebläse (53) umfasst, das im Betrieb Luft nach unten über die Einlassseite des Motors (20) und über andere Teile der Antriebseinheit drückt, ehe diese Luft den Einbauraum (6) für die Antriebseinheit durch Auslässe in dessen Bodenabschnitt verlässt.

7. Omnibus nach einem der vorangehenden Patentansprüche, **dadurch gekennzeichnet, dass** die Ventilabdeckung(en) (47) des Motors Bestandteil von deren ortsfesten Bauteilen ist bzw. sind, welche die Ausdehnung des Motors in der Längsrichtung des Omnibusses nach hinten begrenzen.

## Revendications

1. Bus muni d'un essieu avant (1) et d'au moins un essieu arrière (2), d'une unité d'entraînement (5) située dans l'extrémité arrière du bus et comportant un moteur à combustion positionné transversalement (20), ayant des cylindres positionnés en ligne, et une transmission pour entraîner l'essieu arrière, le moteur (20) étant sensiblement incliné, de sorte que le point le plus élevé de ses cylindres est relativement proche de la paroi arrière (9) du bus, **caractérisé en ce que** le moteur est suralimenté, une unité de suralimentation (30) appartenant au moteur étant située radialement à l'extérieur d'un recouvrement de roue volante (51) connecté au moteur.

2. Bus selon la revendication 1, **caractérisé en ce que** le moteur a un côté d'échappement en vis-à-vis de la direction arrière du bus, et un côté d'entrée en vis-à-vis de la direction avant du bus, **en ce que** l'unité de suralimentation (30) est une unité de turbocompresseur ayant une turbine (31) entraînée par des gaz d'échappement et un compresseur centrifuge (32) monté sur l'arbre de turbine, et entraîné par la turbine, et l'arbre de turbine (52) a une étendue sensiblement transversale à l'étendue longitudinale du moteur, la turbine étant dirigée vers la paroi arrière (9) du bus.

3. Bus selon la revendication 2, **caractérisé en ce qu'**un filtre sensiblement cylindrique (34) destiné au nettoyage de l'air d'entrée du moteur est situé dans la direction longitudinale du moteur après l'unité de suralimentation (30) au-dessus d'une boîte de vitesse (21) connectée au moteur, et formant une partie de la transmission du bus.

4. Bus selon la revendication 3, **caractérisé en ce que** l'unité de suralimentation (30) et/ou le filtre à air (34) a/ont des surfaces limitatrices supérieures qui définissent essentiellement un plan limitateur horizontal supérieur qui forme la base d'un siège banquette arrière (7).

5. Bus selon la revendication 4, **caractérisé en ce qu'**une partie formant plancher horizontal (13) est adaptée pour des passagers s'asseyant sur la banquette arrière (7), et a une ligne limitatrice arrière qui s'étend à travers le bus, et qui est essentiellement défini par un point limitateur extérieur du recouvrement de roue volante de moteur (51).

6. Bus selon l'une quelconque des revendications précédentes, **caractérisé en ce que** l'unité d'entraînement comporte, pour le moteur, un dispositif formant radiateur (23) qui est situé le long de la paroi arrière du bus au-dessus de l'extrémité du moteur dirigée loin du recouvrement de roue volante, dispositif formant radiateur (23) qui comporte un ventilateur (53) qui, lorsqu'il fonctionne, pousse de l'air vers le bas à travers le côté d'entrée du moteur (20) et à travers d'autres parties de l'unité d'entraînement avant que ledit air ne quitte l'espace d'unité d'entraînement (6) via des sorties situées dans la partie formant plancher de cette dernière.

7. Bus selon l'une quelconque des revendications précédentes, **caractérisé en ce que** le ou les recouvrements de soupape du moteur (47) est/sont la pièce/les pièces de ses composants fixes qui limite/limitent l'étendue du moteur vers l'arrière dans la direction longitudinale du bus.
